# EUROPEAN PATENT APPLICATION

(11) **EP 4 787 449 A1**
(43) Date of publication of application: **05.08.2026**
(21) Application number: 24872253.0
(22) Date of filing: 25.09.2024
(51) Int. Cl.: H01M 4/131, H01M 4/62

(54) **NON-AQUEOUS ELECTROLYTE SECONDARY BATTERY**

(30) Priority: 26.09.2023 JP 2023163010
(71) Applicant: Panasonic Intellectual Property Management Co., Ltd., Kadoma-shi, Osaka 571-0057 (JP)
(72) Inventor: SATO, Hiroki, Kadoma-shi, Osaka 571-0057 (JP); SAWA, Shouichiro, Kadoma-shi, Osaka 571-0057 (JP)
(74) Representative: Novagraaf International SA
(86) International application number: PCT/JP2024/034127
(87) International publication number: WO 2025/070467

(57) **Abstract**

This non-aqueous electrolyte secondary battery (10) comprises a positive electrode (11), a negative electrode (12), and a non-aqueous electrolyte, the non-aqueous electrolyte secondary battery being characterized in that: the positive electrode (11) has a positive electrode current collector (30) and a positive electrode mixture layer (32) that is disposed on the surface of the positive electrode current collector (30) and contains a positive electrode active material; the positive electrode mixture layer (32) contains a first conductive agent having a hydrogen content of 1.0-2.0 mg/g, and a second conductive agent having a hydrogen content of 0.5 mg/g or less; the positive electrode mixture layer (32) has a first positive electrode mixture layer (34) disposed on the positive electrode current collector (30) side, and a second positive electrode mixture layer (36) disposed on the surface side of the positive electrode mixture layer (32); the first positive electrode mixture layer (34) contains more of the first conductive agent than the second conductive agent in terms of mass; and the second positive electrode mixture layer (36) contains more of the second conductive agent than the first conductive agent in terms of mass.

## Description

### TECHNICAL FIELD

The present disclosure relates to a non-aqueous electrolyte secondary battery.

### BACKGROUND

A positive electrode of a non-aqueous electrolyte secondary battery in general has a positive electrode current collector which is a metal foil, and a positive electrode mixture layer which contains a positive electrode active material, a conductive agent, and a binder, and which is disposed on the positive electrode current collector. Patent Literature 1 discloses a positive electrode which uses, as the conductive agent, carbon black in which a BET specific surface area is controlled to be within a predetermined range.

### CITATION LIST

### PATENT LITERATURE

Patent Literature 1: JP 2020-524192 A

### SUMMARY

In recent years, with wide-spreading of the electric vehicles or the like as background, there is a demand for improvement of output characteristics of non-aqueous electrolyte secondary batteries. A resistance at an interface between the positive electrode current collector and the positive electrode mixture layer (interface resistance) significantly affects the output characteristics of the battery. The technique of Patent Literature 1 does not sufficiently consider the interface resistance, and there remain large rooms of improvement.

According to one aspect of the present disclosure, there is provided a non-aqueous electrolyte secondary battery including: a positive electrode; a negative electrode; and a non-aqueous electrolyte, wherein the positive electrode includes a positive electrode current collector, and a positive electrode mixture layer disposed on a surface of the positive electrode current collector, and which contains a positive electrode active material, the positive electrode mixture layer contains a first conductive agent having a hydrogen content of greater than or equal to 1.0 mg/g and less than or equal to 2.0 mg/g, and a second conductive agent having a hydrogen content of less than or equal to 0.5 mg/g, the positive electrode mixture layer includes a first positive electrode mixture layer disposed on a side of the positive electrode current collector, and a second positive electrode mixture layer disposed on a side of a surface of the positive electrode mixture layer, and the first positive electrode mixture layer contains a greater amount as a mass equivalent of the first conductive agent than the second conductive agent, and the second positive electrode mixture layer contains a greater amount as a mass equivalent of the second conductive agent than the first conductive agent.

According to a non-aqueous electrolyte secondary battery according to an aspect of the present disclosure, the interface resistance can be reduced.

### BRIEF DESCRIPTION OF DRAWINGS

FIG. 1 is a cross-sectional diagram in an axial direction of a non-aqueous electrolyte secondary battery according to an embodiment of the present disclosure.
FIG. 2 is a perspective diagram of an electrode assembly of a wound type provided in the non-aqueous electrolyte secondary battery according to an embodiment of the present disclosure.
FIG. 3 is a cross-sectional diagram of a positive electrode provided in the non-aqueous electrolyte secondary battery according to an embodiment of the present disclosure.

### DESCRIPTION OF EMBODIMENTS

A non-aqueous electrolyte secondary battery according to an embodiment of the present disclosure will now be described in detail with reference to the drawings. In the following, a specific shape, a specific material, a specific numerical value, a specific direction, and the like are merely exemplary for the purpose of facilitating understanding of the present disclosure, and these parameters may be suitably changed according to the specification of the non-aqueous electrolyte secondary battery. In the following description, when a plurality of embodiments and alternative configurations are included, suitable combinations of the characteristic portions thereof are contemplated from the start.

In the following, a circular cylindrical battery in which an electrode assembly 14 of a wound type is housed in a housing can 16 having a circular cylindrical shape with a bottom will be exemplified as the non-aqueous electrolyte secondary battery, but the housing can of the battery is not limited to the housing can of the circular cylindrical shape. The non-aqueous electrolyte secondary battery according to the present disclosure may alternatively be, for example, a polygonal battery having a polygonal housing can, a coin-shape battery having a coin-shape housing can, or a pouch-type battery having a housing can formed from a laminated sheet including a metal layer and a resin layer.

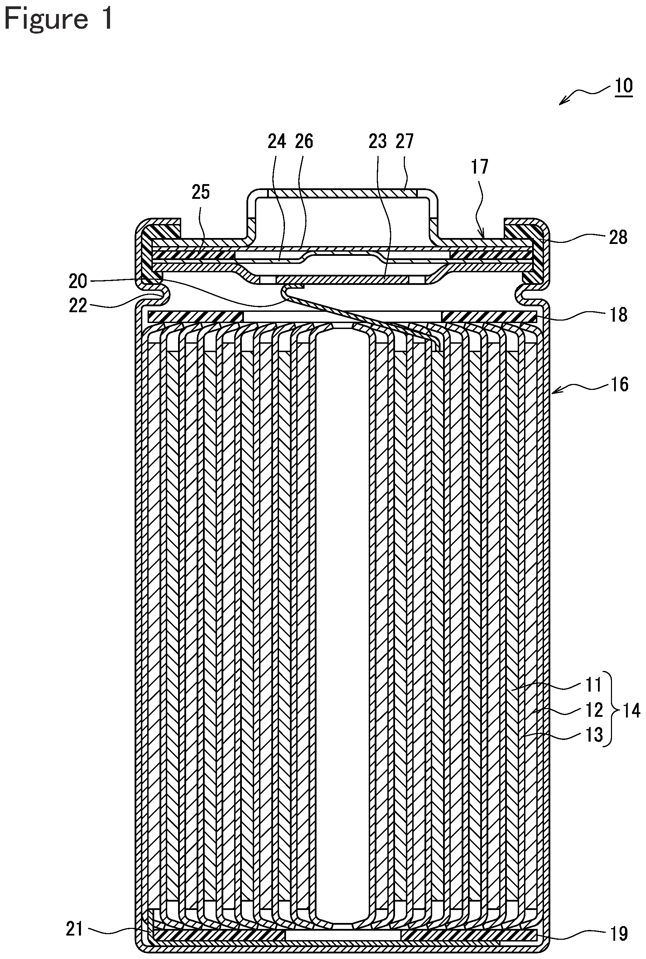

FIG. 1 is a cross-sectional diagram of a non-aqueous electrolyte secondary battery 10 according to an embodiment of the present disclosure. As illustrated in FIG. 1, the non-aqueous electrolyte secondary battery 10 comprises the electrode assembly 14, a non-aqueous electrolyte (not shown), and the housing can 16 which houses the electrode assembly 14 and the non-aqueous electrolyte.

As will be described in detail later, the electrode assembly 14 comprises a positive electrode 11, a negative electrode 12, and a separator 13, and has a wound structure in which the positive electrode 11 and the negative electrode 12 are wound in a spiral shape with the separator 13 therebetween. The electrode assembly 14 comprises a positive electrode lead 20 connected to the positive electrode 11 by welding or the like, and a negative electrode lead 21 connected to the negative electrode 12 by welding or the like.

The non-aqueous electrolyte has lithium ion conductivity. The non-aqueous electrolyte may be a liquid-state electrolyte (electrolyte solution) or a solid electrolyte.

The liquid-state electrolyte (electrolyte solution) contains a non-aqueous solvent and an electrolyte salt dissolved in the non-aqueous solvent. For the non-aqueous solvent, for example, esters, ethers, nitriles, amides, or a mixture solvent of two or more of these solvents may be employed. Examples of the non-aqueous solvent include ethylene carbonate (EC), ethylmethyl carbonate (EMC), dimethyl carbonate (DMC), diethyl carbonate (DEC), and a mixture solvent of these solvents. The non-aqueous solvent may include a halogen-substituted product in which at least a part of hydrogens of the solvent described above is substituted with a halogen atom such as fluorine (for example, fluoroethylene carbonate or the like). For the electrolyte salt, for example, a lithium salt such as LiPF₆ is employed.

As the solid electrolyte, for example, there may be employed a solid-state or gel-state polymer electrolyte, an inorganic solid electrolyte, or the like. As the inorganic solid electrolyte, materials known in the field of an all-solid-state lithium ion secondary battery or the like (such as, for example, an oxide-based solid electrolyte, a sulfide-based solid electrolyte, a halogen-based solid electrolyte) may be employed. For example, the polymer electrolyte contains a lithium salt and a matrix polymer, or contains a non-aqueous solvent, the lithium salt, and the matrix polymer. As the matrix polymer, for example, a polymer material which absorbs the non-aqueous solvent and forms a gel is used. As the polymer material, there may be exemplified a fluorine resin, an acrylic resin, a polyether resin, or the like.

The housing can 16 is a metal container having a circular cylindrical shape with a bottom and having one end side in an axial direction opened, and the opening of the housing can 16 is blocked by a sealing assembly 17. In the following, for the convenience of the description, the side of the sealing assembly 17 of the battery will be referred to as an "upper side", and the side of the bottom of the housing can 16 will be referred to as a "lower side".

Insulating plates 18 and 19 are disposed respectively above and below the electrode assembly 14. In the illustrated example structure of FIG. 1, the positive electrode lead 20 extends through a through hole of the insulating plate 18 toward the side of the sealing assembly 17, and the negative electrode lead 21 extends to the side of the bottom of the housing can 16 through an outer side of the insulating plate 19. The positive electrode lead 20 is connected to a lower surface of an internal terminal plate 23 of the sealing assembly 17 by welding or the like, and a cap 27 which is a top plate of the sealing assembly 17 electrically connected to the internal terminal plate 23 serves as a positive electrode terminal. The negative electrode lead 21 is connected to an inner surface of the bottom of the housing can 16 by welding or the like, and the housing can 16 serves as a negative electrode terminal.

A gasket 28 is provided between the housing can 16 and the sealing assembly 17, so as to secure hermiticity inside the battery. The housing can 16 has a groove portion 22 in which a part of a side surface portion is projected toward an inner side, and which supports the sealing assembly 17. The groove portion 22 is desirably formed in an annular shape along a circumferential direction of the housing can 16, and supports the sealing assembly 17 with the upper surface thereof. The sealing assembly 17 is fixed at an upper part of the housing can 16 by the groove portion 22 and an opening end of the housing can 16 crimped with respect to the sealing assembly 17.

The sealing assembly 17 has a structure in which the internal terminal plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an internal pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the internal pressure further increases, the upper vent member 26 ruptures, and gas is exhausted from an opening of the cap 27.

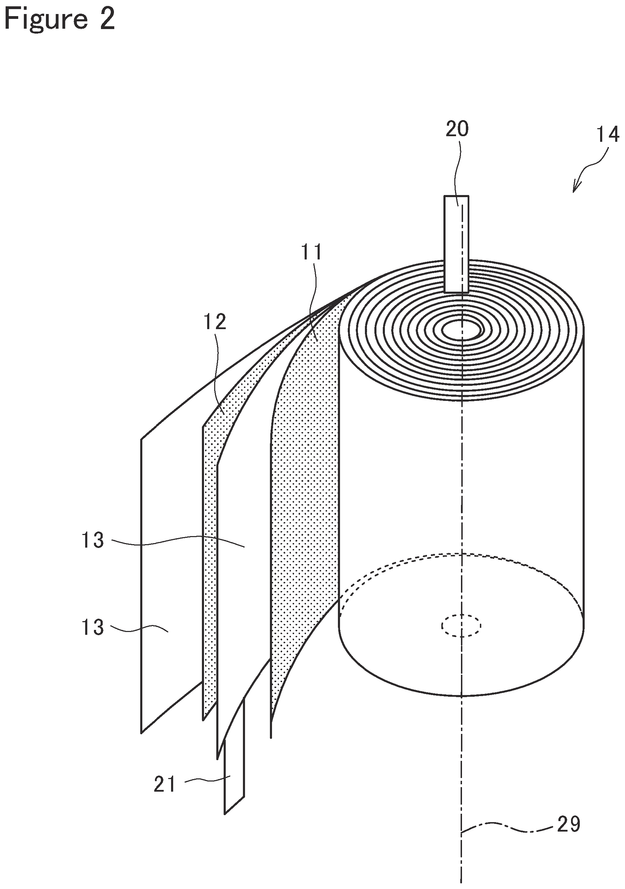

Next, the electrode assembly 14 will be described in detail with reference to FIG. 2. FIG. 2 is a perspective diagram of the electrode assembly 14. As already described, the electrode assembly 14 has a wound structure in which the positive electrode 11 and the negative electrode 12 are wound in a spiral shape with the separator 13 therebetween. The positive electrode 11, the negative electrode 12, and the separator 13 are each formed in a band shape, and are wound in the spiral shape around a winding core disposed along a winding axis 29, to thereby result in a state in which these members are alternately layered in a radial direction of the electrode assembly 14. In the electrode assembly 14, a longitudinal direction of the positive electrode 11 and the negative electrode 12 serves as a winding direction, and a width direction of the positive electrode 11 and the negative electrode 12 serves as an axial direction. The positive electrode lead 20 extends, at an upper end of the electrode assembly 14, in the axial direction from a region at approximately center in a radial direction between a center and an outermost circumference. The negative electrode lead 21 extends in the axial direction at a lower end of the outermost circumference of the electrode assembly 14. Alternatively, the negative electrode lead 21 may extend in the axial direction from a region near the winding axis 29 at the lower end of the electrode assembly 14.

The negative electrode 12 comprises a negative electrode current collector, and a negative electrode mixture layer formed on a surface of the negative electrode current collector. For the negative electrode current collector, there may be employed a foil of a metal stable within a potential range of the negative electrode 12 such as copper, a copper alloy, or the like, a film on a surface layer of which the metal is placed, or the like. An example of the negative electrode current collector is a foil of copper or a copper alloy having a thickness of greater than or equal to 5 µm and less than or equal to 15 µm. The negative electrode mixture layer contains a negative electrode active material and a binder, and is desirably formed on both surfaces of the negative electrode current collector. A thickness of the negative electrode mixture layer is, for example, greater than or equal to 30 µm and less than or equal to 150 µm on one side of the negative electrode current collector. The negative electrode 12 can be produced by applying a negative electrode mixture slurry including the negative electrode active material, the binder, or the like on the negative electrode current collector, drying the applied film, and compressing the dried film, to form the negative electrode mixture layer on both surfaces of the negative electrode current collector.

The negative electrode mixture layer contains, as a negative electrode active material, for example, a carbon-based active material which reversibly occludes and releases lithium ions. An example of a desirable carbon-based active material is graphite such as natural graphite such as flaky graphite, massive graphite, and amorphous graphite, and artificial graphite such as massive artificial graphite (MAG) and graphitized meso-phase carbon microbeads (MCMB). In addition, for the negative electrode active material, a Si-based active material which is formed from at least one of Si and a Si-containing compound may be employed, and, alternatively, the carbon-based active material and the Si-based active material may be used in combination.

As the binder contained in the negative electrode mixture layer, a fluororesin such as PTFE and PVdF, PAN, polyimide, an acrylic resin, polyolefin, and styrene-butadiene rubber (SBR) may be employed. The negative electrode mixture layer may further contain CMC or a salt thereof, polyacrylic acid (PAA) or a salt thereof, polyvinyl alcohol (PVA), or the like. A content of the binder is, for example, greater than or equal to 0.1 parts by mass and less than or equal to 10 parts by mass with respect to 100 parts by mass of the negative electrode active material, and is desirably greater than or equal to 0.5 parts by mass and less than or equal to 5 parts by mass. In addition, a conductive agent such as carbon black, acetylene black, and Ketjenblack may be added to the negative electrode mixture layer.

For the separator 13, a porous sheet having ion permeability and an insulating property is employed. Specific examples of the porous sheet include a microporous thin film, a woven fabric, a non-woven fabric, or the like. As a material forming the separator 13, desirably, polyolefin such as polyethylene and polypropylene, cellulose, or the like is employed. The separator 13 may have a single-layer structure or a multilayer structure. On a surface of the separator 13, a resin layer of a high heat resistivity, such as an aramid resin, or the like, may be formed.

A filler layer containing a filler of inorganic materials may be formed at an interface between the separator 13 and the positive electrode 11 and/or at an interface between the separator 13 and the negative electrode 12. As the filler of the inorganic materials, there may be exemplified oxides containing a metal element such as Ti, Al, Si, Mg, or the like, a phosphate compound, or the like. The filler layer can be formed by applying a slurry containing the filler on a surface of the positive electrode 11, the negative electrode 12, or the separator 13.

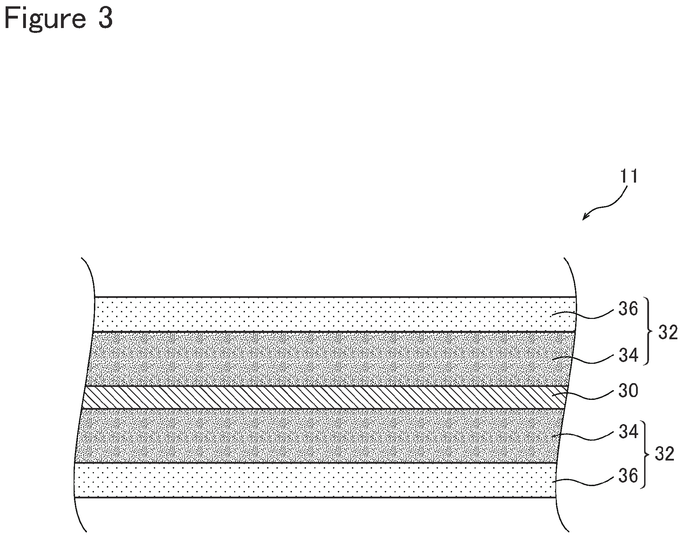

Next, with further reference to FIG. 3, the positive electrode 11 of the electrode assembly 14 will be described in detail. FIG. 3 is a cross-sectional diagram of the positive electrode 11.

As shown in FIG. 3, the positive electrode 11 comprises a positive electrode current collector 30, and a positive electrode mixture layer 32 disposed on at least one surface of the positive electrode current collector 30, and which contains a positive electrode active material. In the present embodiment, the positive electrode mixture layer 32 is disposed on both surfaces of the positive electrode current collector 30 except for a portion to which the positive electrode lead 20 is connected.

For the positive electrode current collector 30, there may be employed a foil of a metal which is stable within a potential range of the positive electrode 11 such as aluminum and an aluminum alloy, a film on a surface layer of which the metal is disposed, or the like. An example of the positive electrode current collector 30 is a foil of aluminum or an aluminum alloy having a thickness of greater than or equal to 10 µm and less than or equal to 20 µm.

The positive electrode mixture layer 32 comprises a first positive electrode mixture layer 34 disposed on a side of the positive electrode current collector 30, and a second positive electrode mixture layer 36 disposed on a surface side of the positive electrode mixture layer 32. In the following, the first positive electrode mixture layer 34 and the second positive electrode mixture layer 36 may be collectively referred to as the positive electrode mixture layer 32. A thickness of the positive electrode mixture layer 32 is desirably greater than or equal to 40 µm and less than or equal to 100 µm on one side of the positive electrode current collector 30, and is more desirably greater than or equal to 50 µm and less than or equal to 90 µm. In the present embodiment, the positive electrode mixture layer 32 has an approximately uniform thickness along a longitudinal direction of the electrode plate.

The positive electrode mixture layer 32 contains the positive electrode active material and a conductive agent. As will be described later in detail, the positive electrode mixture layer 32 contains, as the conductive agent, a first conductive agent having a hydrogen content of greater than or equal to 1.0 mg/g and less than or equal to 2.0 mg/g, and a second conductive agent having a hydrogen content of less than or equal to 0.5 mg/g.

The positive electrode mixture layer 32 contains, as the positive electrode active material, a lithium-containing composite oxide of a particulate form. The lithium-containing composite oxide is a composite oxide containing, in addition to Li, a metal element such as Co, Mn, Ni, Al, and the like. The metal element forming the lithium-containing composite oxide is, for example, at least one element selected from Mg, Al, Ca, Sc, Ti, V, Cr, Mn, Fe, Co, Ni, Cu, Zn, Ga, Ge, Y, Zr, Sn, Sb, W, Pb, and Bi. Of these elements, the lithium-containing composite oxide desirably contains at least one element selected from Co, Ni, Al, and Mn. Examples of the desirable composite oxide include a lithium-containing composite oxide containing Ni, Co, and Mn, and a lithium-containing composite oxide containing Ni, Co, and Al.

A content of the positive electrode active material is desirably greater than or equal to 85 mass% and less than or equal to 99.5 mass% with respect to a mass of the positive electrode mixture layer 32, and is more desirably greater than or equal to 90 mass% and less than or equal to 99 mass%. The content of the positive electrode active material may be equal or different between the first positive electrode mixture layer 34 and the second positive electrode mixture layer 36.

The lithium-containing composite oxide is, for example, a secondary particle formed by aggregation of a plurality of primary particles. A volume-based median diameter (D50) of the composite oxide is not particularly limited, and, as an example, is greater than or equal to 3 µm and less than or equal to 30 µm, or is desirably greater than or equal to 5 µm and less than or equal to 25 µm. When the composite oxide is the secondary particle formed by aggregation of primary particles, D50 of the composite oxide refers to D50 of the secondary particle. D50 refers to a particle diameter at which an accumulation of frequencies in a volume-based granularity distribution reaches 50% from the lower side, and is also called a middle size. The granularity distribution of the composite oxide can be measured using a granularity distribution measurement apparatus of a laser diffraction type (for example, MT3000II manufactured by MicrotracBEL corporation), and using water as a dispersion medium (this is similarly applicable to the case of the positive electrode active material).

An average particle diameter of the primary particles forming the lithium-containing composite oxide is, for example, greater than or equal to 0.05 µm and less than or equal to 1 µm. The average particle diameter of the primary particles is calculated by averaging diameters of circumscribing circles of primary particles extracted through analysis of a scanning electron microscope (SEM) image of a cross section of the secondary particle.

As described above, the positive electrode mixture layer 32 contains the first conductive agent having the hydrogen content of greater than or equal to 1.0 mg/g and less than or equal to 2.0 mg/g, and the second conductive agent having the hydrogen content of less than or equal to 0.5 mg. The first positive electrode mixture layer 34 contains, as a mass equivalent, a greater amount of the first conductive agent than the second conductive agent, and the second positive electrode mixture layer 36 contains, as the mass equivalent, a greater amount of the second conductive agent than the first conductive agent. That is, of the positive electrode mixture layer 32, on the side of the positive electrode current collector 30, the first conductive agent is contained in a greater amount, and, on the surface side, the second conductive agent is contained in a greater amount.

As a result of studies by the present inventors, it was found that, when the hydrogen content of the conductive agent present on the side of the positive electrode current collector 30 is greater than or equal to 1.0 mg/g and less than or equal to 2.0 mg/g, a superior conductive path is formed between the conductive agent and the positive electrode current collector 30, and the interface resistance is thus reduced. The reason for this can be deduced as because, when the hydrogen content of the conductive agent is greater than or equal to 1.0 mg/g and less than or equal to 2.0 mg/g, a suitable amount of a surface functional group which improves dispersibility of the conductive agent is formed on the surface of the conductive agent, resulting in improved dispersibility of the conductive agent, and consequent formation of the superior conductive path due to suitable dispersion of the conductive agent near the positive electrode current collector 30. The surface functional group which improves the dispersibility of the conductive agent is, for example, a hydroxyl group or a carboxy group.

On the other hand, although the conductive agent having the hydrogen content of greater than or equal to 1.0 mg/g and less than or equal to 2.0 mg/g forms the superior conductive path with the positive electrode current collector 30, a superior conductive path tends to be not formed between the conductive agents. As such, the second conductive agent having the hydrogen content of less than or equal to 0.5 mg is provided on the surface side, of the positive electrode mixture layer 32, distanced from the positive electrode current collector 30, so that a superior conductive path can be formed inside the positive electrode mixture layer 32 while maintaining the superior conductive path between the positive electrode current collector 30 and the positive electrode mixture layer 32.

It is sufficient that the hydrogen content of the first conductive agent is greater than or equal to 1.0 mg/g and less than or equal to 2.0 mg/g, but from the viewpoint of further reducing the interface resistance, the hydrogen content is desirably greater than or equal to 1.1 mg/g and less than or equal to 1.9 mg/g, and is more desirably greater than or equal to 1.2 mg/g and less than or equal to 1.8 mg/g. When the hydrogen content of the conductive agent exceeds 2.0 mg/g, the formation of the superior conductive path between the conductive agents becomes more difficult, possibly resulting in an increased interface resistance.

A carbon monoxide content of the first conductive agent is desirably greater than or equal to 10 mg/g, is more desirably greater than or equal to 15 mg/g, and is further desirably greater than or equal to 20 mg/g. Here, it can be deduced that the carbon monoxide content of the first conductive agent indicates an amount of the carboxy group present on the surface of the conductive agent. Thus, when the carbon monoxide content of the first conductive agent is greater than or equal to 10 mg/g, a superior conductive path is formed between the conductive agent and the positive electrode current collector 30, and the interface resistance is reduced. On the other hand, when the amount of the carboxy group on the surface of the first conductive agent excessively increases, it becomes more difficult to form the superior conductive path between the conductive agents, possibly resulting in an increased interface resistance. Therefore, the carbon monoxide content of the first conductive agent is desirably less than or equal to 50 mg/g, is more desirably less than or equal to 45 mg/g, and is further desirably less than or equal to 40 mg/g. Thus, the carbon monoxide content of the first conductive agent is desirably greater than or equal to 10 mg/g and less than or equal to 50 mg/g, is more desirably greater than or equal to 15 mg/g and less than or equal to 45 mg/g, and is further desirably greater than or equal to 20 mg/g and less than or equal to 40 mg/g.

The hydrogen content and the carbon monoxide content of the first conductive agent can be measured, for example, through an inert gas fusion-non-dispersive infrared absorption method (measurement apparatus: EMGA-830 manufactured by Horiba, Ltd.). The hydrogen content and the carbon monoxide content of the second conductive agent to be described later can be similarly measured.

From the viewpoint of forming a superior conductive path between the conductive agent and the positive electrode current collector 30, a BET specific surface area of the first conductive agent is desirably greater than or equal to 60 m²/g, is more desirably greater than or equal to 70 m²/g, and is further desirably greater than or equal to 80 m²/g. On the other hand, when the BET specific surface area of the first conductive agent is excessively increased, formation of the superior conductive path between the conductive agents becomes more difficult, possibly resulting in an increased interface resistance. Therefore, the BET specific surface area of the first conductive agent is desirably less than or equal to 110 m²/g, is more desirably less than or equal to 105 m²/g, and is further desirably less than or equal to 100 m²/g. Thus, the BET specific surface area of the first conductive agent is desirably greater than or equal to 60 m²/g and less than or equal to 110 m²/g, is more desirably greater than or equal to 70 m²/g and less than or equal to 105 m²/g, and is further desirably greater than or equal to 80 m²/g and less than or equal to 100 m²/g. The BET specific surface area is measured according to the BET method (nitrogen adsorption method) described in JIS R1626.

As the first conductive agent, for example, there may be employed one or more materials selected from the group consisting of carbon black (CB) such as furnace black (FB), acetylene black (AB), and Ketjenblack (KB), carbon nanotubes (CNT), and graphene. Of these, from the viewpoint of having the hydrogen content of greater than or equal to 1.0 mg/g and less than or equal to 2.0 mg/g, the furnace black is desirably used as the first conductive agent. Further, the hydrogen content of the first conductive agent may be adjusted by applying a surface treatment. As the surface treatment described above, for example, there may be exemplified surface oxidation through an acid treatment using a strong acid. By immersing the conductive agent in a mixture acid in which sulfuric acid and nitric acid are mixed, and applying a heating treatment, the carboxy group can be introduced to the surface of the conductive agent.

In the first positive electrode mixture layer 34, a content of the first conductive agent with respect to a total mass of the positive electrode active material is desirably greater than or equal to 0.5 mass%, is desirably greater than or equal to 0.75 mass%, and is further desirably greater than or equal to 1.0 mass%. In this case, a superior conductive path is formed between the conductive agent and the positive electrode current collector 30, and the interface resistance is reduced. In addition, from the viewpoint of securing the amount of the positive electrode active material in the positive electrode mixture layer 32 and realizing high capacity of the battery, the content of the first conductive agent with respect to the total mass of the positive electrode active material in the first positive electrode mixture layer 34 is desirably less than or equal to 2.0 mass%, is more desirably less than or equal to 1.75 mass%, and is further desirably less than or equal to 1.5 mass%. Thus, the content of the first conductive agent with respect to the total mass of the positive electrode active material in the first positive electrode mixture layer 34 is desirably greater than or equal to 0.5 mass% and less than or equal to 2.0 mass%, is more desirably greater than or equal to 0.75 mass% and less than or equal to 1.75 mass%, and is further desirably greater than or equal to 1.0 mass% and less than or equal to 1.5 mass%.

The first positive electrode mixture layer 34 may further contain the second conductive agent as the conductive agent, but has the first conductive agent as a primary component. More specifically, a content of the first conductive agent with respect to a total mass of the conductive agent in the first positive electrode mixture layer 34 is desirably greater than or equal to 90 mass%, is more desirably greater than or equal to 95 mass%, and is further desirably greater than or equal to 99 mass%.

As described above, the second conductive agent has the hydrogen content of less than or equal to 0.5 mg/g, and is primarily contained in the second positive electrode mixture layer 36. The hydrogen content of the second conductive agent is desirably less than or equal to 0.45 mg/g, is more desirably less than or equal to 0.4 mg/g, and is further desirably less than or equal to 0.35 mg/g. As the hydrogen content of the second conductive agent becomes smaller, formation of the superior conductive path between the conductive agents becomes easier, resulting in reduction of the internal resistance of the positive electrode mixture layer 32.

A carbon monoxide content of the second conductive agent is desirably less than 10 mg/g, is more desirably less than or equal to 9 mg/g, and is further desirably less than or equal to 8 mg/g. Here, as already described, the carbon monoxide content of the second conductive agent can be deduced to indicate an amount of the carboxy group present on the surface of the conductive agent. Because of this, when the carbon monoxide content of the first conductive agent is less than 10 mg/g, formation of the superior conductive path between the conductive agents becomes easier, and the internal resistance of the positive electrode mixture layer 32 is reduced.

From the viewpoint of forming the superior conductive path between the conductive agents, a BET specific surface area of the second conductive agent is desirably greater than or equal to 110 m²/g and less than or equal to 180 m²/g, is more desirably greater than or equal to 120 m²/g and less than or equal to 170 m²/g, and is further desirably greater than or equal to 130 m²/g and less than or equal to 160 m²/g.

As the second conductive agent, similar to the first conductive agent, for example, there may be employed at least one material selected from the group consisting of carbon black (CB) such as furnace black (FB), acetylene black (AB), and Ketjenblack (KB), carbon nanotubes (CNT), and graphene. Of these, from the viewpoint of having the hydrogen content of less than or equal to 0.5 mg/g, acetylene black is desirably used as the second conductive agent.

In the second positive electrode mixture layer 36, a content of the second conductive agent with respect to a total mass of the positive electrode active material is desirably greater than or equal to 0.5 mass%, is more desirably greater than or equal to 0.75 mass%, and is further desirably greater than or equal to 1.0 mass%. In this case, formation of the superior conductive path between the conductive agents becomes easier, and the internal resistance of the positive electrode mixture layer 32 is reduced. In addition, from the viewpoint of securing the amount of positive electrode active material in the positive electrode mixture layer 32 and realizing high capacity of the battery, the content of the second conductive agent with respect to the total mass of the positive electrode active material in the second positive electrode mixture layer 36 is desirably less than or equal to 2.0 mass%, is more desirably less than or equal to 1.75 mass%, and is further desirably less than or equal to 1.5 mass%. Thus, the content of the second conductive agent with respect to the total mass of the positive electrode active material in the second positive electrode mixture layer 36 is desirably greater than or equal to 0.5 mass% and less than or equal to 2.0 mass%, is more desirably greater than or equal to 0.75 mass% and less than or equal to 1.75 mass%, and is further desirably greater than or equal to 1.0 mass% and less than or equal to 1.5 mass%.

The second positive electrode mixture layer 36 may further contain the first conductive agent as the conductive agent, but has the second conductive agent as a primary component. More specifically, a content of the second conductive agent with respect to a total mass of the conductive agent in the second positive electrode mixture layer 36 is desirably greater than or equal to 90 mass%, is more desirably greater than or equal to 95 mass%, and is further desirably greater than or equal to 99 mass%.

As already described, the positive electrode mixture layer 32 comprises the first positive electrode mixture layer 34 disposed on the side of the positive electrode current collector 30, and the second positive electrode mixture layer 36 disposed on the surface side of the positive electrode mixture layer 32. Here, a ratio of a thickness of the first positive electrode mixture layer 34 with respect to a total (thickness of the positive electrode mixture layer 32) of the thickness of the first positive electrode mixture layer 34 and a thickness of the second positive electrode mixture layer 36 is desirably greater than or equal to 0.1, is more desirably greater than or equal to 0.15, and is further desirably greater than or equal to 0.2. In this case, because the first conductive agent is present in a greater amount on the side, of the positive electrode mixture layer, near the positive electrode current collector 30, a superior conductive path is formed between the conductive agent and the positive electrode current collector 30, and the interface resistance is reduced. On the other hand, as described above, with the first conductive agent, formation of superior conductive path between the conductive agents is difficult. Thus, if the ratio of the thickness of the first positive electrode mixture layer 34 containing the first conductive agent in a greater amount becomes too large, the internal resistance of the positive electrode mixture layer 32 may be increased. Thus, the ratio of the thickness of the first positive electrode mixture layer 34 with respect to the total of the thickness of the first positive electrode mixture layer 34 and the thickness of the second positive electrode mixture layer 36 is desirably less than or equal to 0.6, is more desirably less than or equal to 0.55, and is further desirably less than or equal to 0.5. That is, the ratio of the thickness of the first positive electrode mixture layer 34 with respect to the total of the thickness of the first positive electrode mixture layer 34 and the thickness of the second positive electrode mixture layer 36 is desirably greater than or equal to 0.1 and less than or equal to 0.6, is more desirably greater than or equal to 0.15 and less than or equal to 0.55, and is further desirably greater than or equal to 0.2 and less than or equal to 0.5.

The positive electrode mixture layer 32 further contains a binder in addition to the positive electrode active material and the conductive agent. As the binder contained in the positive electrode mixture layer 32, there may be exemplified a fluorine-containing polymer such as polytetrafluoroethylene (PTFE) and polyvinylidene fluoride (PVDF), polyacrylonitrile (PAN), polyimide, an acrylic resin, polyolefin, or the like. Alternatively, these resins and carboxymethylcellulose (CMC) or a salt thereof, polyethylene oxide (PEO), or the like may be used in combination. A content of the binder is, for example, greater than or equal to 0.1 mass% and less than or equal to 5 mass% with respect to a total mass of the positive electrode active material, and is desirably greater than or equal to 0.1 mass% and less than or equal to 2 mass%. The content of the binder may be equal or different between the first positive electrode mixture layer 34 and the second positive electrode mixture layer 36.

Next, a production method of the positive electrode 11 comprising the positive electrode mixture layer 32 including the first positive electrode mixture layer 34 and the second positive electrode mixture layer 36 will be described. The positive electrode 11 can be produced, for example, through an active material production process to produce the positive electrode active material, an adjustment process to adjust a positive electrode mixture slurry including the positive electrode active material, the conductive agent, and the binder, an application process to apply the positive electrode mixture slurry on the surface of the positive electrode current collector 30, and to dry the applied film, and a rolling process to roll the applied film produced in the application process. Here, in the adjustment process, a first positive electrode mixture slurry including the first conductive agent as the conductive agent, and a second positive electrode mixture slurry including the second conductive agent as the conductive agent are produced.

In the application process, for example, after the first positive electrode mixture slurry is applied on the positive electrode current collector 30, the second positive electrode mixture slurry is applied on the applied film. With this process, the positive electrode mixture layer 32 of a two-layer structure can be formed, which includes the first positive electrode mixture layer formed from the first positive electrode mixture slurry and the second positive electrode mixture layer formed from the second positive electrode mixture slurry. In this case, the thicknesses of the first positive electrode mixture layer 34 and the second positive electrode mixture layer 36 can be adjusted by amounts of application of the first positive electrode mixture slurry and the second positive electrode mixture slurry. The production method of the positive electrode mixture layer 32 is not limited to the above-described method. For example, using an application apparatus having two ejection ports, the first positive electrode mixture slurry and the second positive electrode mixture slurry may be applied simultaneously on the surface of the positive electrode current collector 30 in such a manner that the first positive electrode mixture slurry and the second positive electrode mixture slurry are applied in this order from the surface side of the positive electrode current collector 30.

### EXAMPLES

The present disclosure will now be further described with reference to Examples and Comparative Examples. The present disclosure, however, is not limited to Examples described below.

### <Example 1>

### [Production of Positive Electrode]

As a positive electrode active material, a lithium composite oxide represented by LiNi_{0.87}Co_{0.09}Al_{0.04}O₂ was used. The positive electrode active material, furnace black (FB) serving as the conductive agent, and polyvinylidene fluoride powder serving as the binder were mixed with a mass ratio of 100:1:0.9, and a suitable amount of N-methyl-2-pyrrolidone (NMP) was added, to prepare a first positive electrode mixture slurry. In addition, the positive electrode active material, acetylene black (AB) serving as the conductive agent, and polyvinylidene fluoride powder serving as the binder were mixed with a mass ratio of 100:1:0.9, and a suitable amount of N-methyl-2-pyrrolidone (NMP) was added, to prepare a second positive electrode mixture slurry. Hydrogen contents of the furnace black and the acetylene black were measured through the above-described method, and were respectively 1.2 mg/g and 0.3 mg/g. Further, carbon monoxide contents of the furnace black and the acetylene black were measured through the above-described method, and were respectively 20 mg/g and 8 mg/g. In addition, BET specific surface areas of the furnace black and the acetylene black were respectively 100 m²/g and 133 m²/g.

The first positive electrode mixture slurry was applied on both surfaces of a positive electrode current collector formed from an aluminum foil, then, the second positive electrode mixture slurry was applied on the applied film of the first positive electrode mixture slurry, and the applied films were dried and compressed. Then, the structure was cut in a predetermined electrode size, to produce a positive electrode, on both surfaces of the positive electrode current collector of which a positive electrode mixture layer was formed which had a two-layer structure including a lower layer (first positive electrode mixture layer) and an upper layer (second positive electrode mixture layer). In addition, an exposed portion at which a surface of the positive electrode current collector is exposed was provided at a portion of the positive electrode. The first positive electrode mixture slurry and the second positive electrode mixture slurry were applied with a mass ratio of 40:60. That is, a ratio of a thickness of the first positive electrode mixture layer with respect to a total (thickness of the positive electrode mixture layer) of the thickness of the first positive electrode mixture layer and a thickness of the second positive electrode mixture layer was 0.4, and a ratio of the second positive electrode mixture layer was 0.6. In addition, the thickness of the positive electrode mixture layer was 80 µm on one side of the positive electrode current collector.

### [Production of Negative Electrode]

As a negative electrode active material, a mixture in which graphite and SiO were mixed with a mass ratio of 95:5 was used. The negative electrode active material, carboxymethylcellulose (CMC) serving as a thickener, and a styrene-butadiene copolymer (SBR) serving as a binder were mixed with a mass ratio of 98:1:1, and water was added, to prepare a first negative electrode mixture slurry. Next, the negative electrode mixture slurry was applied on both surfaces of a negative electrode current collector formed from a copper foil, the applied film was dried and compressed, and the structure was cut in a predetermined electrode size, to prepare a negative electrode, on both surfaces of the negative electrode current collector of which a negative electrode mixture layer was formed. In addition, an exposed portion at which a surface of the negative electrode current collector is exposed was provided at a portion of the negative electrode.

### [Preparation of Non-aqueous Electrolyte Solution]

Ethylene carbonate (EC) and dimethyl carbonate (DMC) were mixed with a volume ratio of 1:3 (25°C). 5 parts by mass of vinylene carbonate (VC) was added to 100 parts by mass of the mixture solvent, and LiPF₆ was dissolved to a concentration of 1 mol/L, to prepare a non-aqueous electrolyte solution.

### [Preparation of Non-Aqueous Electrolyte Secondary Battery]

A positive electrode lead was attached to the exposed portion of the positive electrode, a negative electrode lead was attached to the exposed portion of the negative electrode, and the positive electrode and negative electrode were wound with a separator made of polyolefin therebetween, to produce an electrode assembly of wound type. Then, insulating plates were disposed respectively above and below the electrode assembly, the negative electrode lead was welded to a case body, the positive electrode lead was welded to a sealing assembly, and the electrode assembly was housed in the case body. After the non-aqueous electrolyte was injected through a depressurization method into the case body, an opening of the case body was sealed with the sealing assembly via a gasket, to produce a test cell.

### [Measurement of Interface Resistance]

For the positive electrode, the interface resistance was measured using an electrode resistance measurement device (device name: RM2610) manufactured by Hioki E. E. Corporation. The measurement current was set at 100 µA, and the voltage range was set at 0.5 V.

### <Comparative Example 1>

A non-aqueous electrolyte secondary battery was produced in a manner similar to Example 1 except that, in the production of the positive electrode, only the second positive electrode mixture slurry was applied on the surface of the positive electrode current collector, and the battery was evaluated. That is, the positive electrode of Comparative Example 1 had a single layer structure. A thickness of the positive electrode mixture layer was 80 µm on one side of the positive electrode current collector, similar to Example 1.

### <Comparative Example 2>

A non-aqueous electrolyte secondary battery was produced in a manner similar to Example 1 except that, in the production of the positive electrode, only the first positive electrode mixture slurry was applied on the surface of the positive electrode current collector, and the battery was evaluated. That is, the positive electrode of Comparative Example 2 had a single layer structure. A thickness of the positive electrode mixture layer was 80 µm on one side of the positive electrode current collector, similar to Example 1.

### <Comparative Example 3>

A non-aqueous electrolyte secondary battery was produced in a manner similar to Example 1 except that, in the production of the positive electrode, the second positive electrode mixture slurry was applied on both surfaces of the positive electrode current collector formed from the aluminum foil, and then, the first positive electrode mixture slurry was applied on the applied film of the second positive electrode mixture slurry, and the battery was evaluated. That is, the positive electrode mixture layer of Comparative Example 3 had a two-layer structure in which the first positive electrode mixture layer formed from the second positive electrode mixture was disposed on the side of the positive electrode current collector, and the second positive electrode mixture layer formed from the first positive electrode mixture slurry was disposed on the surface side of the positive electrode mixture layer. The first positive electrode mixture slurry and the second positive electrode mixture slurry were applied with a mass ratio of 60:40. That is, a ratio of a thickness of the first positive electrode mixture layer with respect to a total (thickness of the positive electrode mixture layer) of the thickness of the first positive electrode mixture layer and a thickness of the second positive electrode mixture layer was 0.4, and a ratio of the thickness of the second positive electrode mixture layer was 0.6. A thickness of the positive electrode mixture layer was 80 µm on one side of the positive electrode current collector, similar to Example 1.

Table 1 shows interface resistances for the batteries of Example and Comparative Examples. Table 1 also shows the layer structure of the positive electrode mixture layer, the kind of conductive agent contained in the positive electrode mixture layer, and the ratios of the thicknesses. The interface resistances of Example and Comparative Examples shown in Table 1 are relative values with the interface resistance of Comparative Example being a value of 100. For the interface resistance, a lower value means a lower resistance.

**[Table 1]**

| | LAYER STRUCTURE | KIND OF CONTAINED CONDUCTIVE AGENT | | RATIO OF THICKNESS | | INTERFACE RESISTANC (RELATIVE VALUE) |
|---|---|---|---|---|---|---|
| | | FIRST POSITIVE ELECTRODE MIXTURE LAYER | SECOND POSITIVE ELECTRODE MIXTURE LAYER | FIRST POSITIVE ELECTRODE MIXTURE LAYER | SECOND POSITIVE ELECTRODE MIXTURE LAYER | |
| EXAMPLE 1 | TWO-LAYER STRUCTURE | FB | AB | 0.4 | 0.6 | 88 |
| COMPARATIVE EXAMPLE 1 | SINGLE LAYER STRUCTURE | AB | | - | | 100 |
| COMPARATIVE EXAMPLE 2 | SINGLE LAYER STRUCTURE | FB | | - | | 97 |
| COMPARATIVE EXAMPLE 3 | TWO-LAYER STRUCTURE | AB | FB | 0.4 | 0.6 | 93 |

As shown in Table 1, Example 1 has a reduced interface resistance in comparison to Comparative Examples. Thus, the interface resistance of the positive electrode can be reduced by employing a two-layer structure for the positive electrode including a first positive electrode mixture layer and a second positive electrode mixture layer, having a greater amount of a first conductive agent having a hydrogen content of greater than or equal to 1.0 mg/g and less than or equal to 2.0 mg/g in the first positive electrode mixture layer on the side of the positive electrode current collector, and having a greater amount of a second conductive agent having a hydrogen content of less than or equal to 0.5 mg/g in the second positive electrode mixture layer on the surface side.

The present disclosure is further described with the following embodiment.

Configuration 1: A non-aqueous electrolyte secondary battery comprising: a positive electrode; a negative electrode; and a non-aqueous electrolyte, wherein
the positive electrode comprises a positive electrode current collector, and a positive electrode mixture layer disposed on a surface of the positive electrode current collector, and which contains a positive electrode active material, the positive electrode mixture layer contains a first conductive agent having a hydrogen content of greater than or equal to 1.0 mg/g and less than or equal to 2.0 mg/g, and a second conductive agent having a hydrogen content of less than or equal to 0.5 mg/g, the positive electrode mixture layer comprises a first positive electrode mixture layer disposed on a side of the positive electrode current collector, and a second positive electrode mixture layer disposed on a side of a surface of the positive electrode mixture layer, and the first positive electrode mixture layer contains a greater amount as a mass equivalent of the first conductive agent than the second conductive agent, and the second positive electrode mixture layer contains a greater amount as a mass equivalent of the second conductive agent than the first conductive agent.

Configuration 2: The non-aqueous electrolyte secondary battery according to Configuration 1, wherein a carbon monoxide content of the first conductive agent is greater than or equal to 10 mg/g and less than or equal to 50 mg/g, and a carbon monoxide content of the second conductive agent is less than 10 mg/g.

Configuration 3: The non-aqueous electrolyte secondary battery according to Configuration 1 or 2, wherein a BET specific surface area of the first conductive agent is greater than or equal to 60 m²/g and less than or equal to 110 m²/g, and a BET surface area of the second conductive agent is greater than 110 m²/g and less than or equal to 180 m²/g.

Configuration 4: The non-aqueous electrolyte secondary battery according to any one of Configurations 1 to 3, wherein the first conductive agent is furnace black, and the second conductive agent is acetylene black.

Configuration 5: The non-aqueous electrolyte secondary battery according to any one of Configurations 1 to 4, wherein a ratio of a thickness of the first positive electrode mixture layer with respect to a total of the thickness of the first positive electrode mixture layer and a thickness of the second positive electrode mixture layer is greater than or equal to 0.1 and less than or equal to 0.6.

Configuration 6: The non-aqueous electrolyte secondary battery according to any one of Configurations 1 to 5, wherein a content of the first conductive agent with respect to a total mass of the positive electrode active material in the first positive electrode mixture layer is greater than or equal to 0.5 mass% and less than or equal to 2.0 mass%.

Configuration 7: The non-aqueous electrolyte secondary battery according to any one of Configurations 1 to 6, wherein a content of the first conductive agent with respect to a total mass of the conductive agent in the first positive electrode mixture layer is greater than or equal to 90 mass%.

Configuration 8: The non-aqueous electrolyte secondary battery according to any one of Configurations 1 to 7, wherein a content of the second conductive agent with respect to a total mass of the positive electrode active material in the second positive electrode mixture layer is greater than or equal to 0.5 mass% and less than or equal to 2.0 mass%.

Configuration 9: The non-aqueous electrolyte secondary battery according to any one of Configurations 1 to 8, wherein a content of the second conductive agent with respect to a total mass of the conductive agent in the second positive electrode mixture layer is greater than or equal to 90 mass%.

### REFERENCE SIGNS LIST

10 non-aqueous electrolyte secondary battery, 11 positive electrode, 12 negative electrode, 13 separator, 14 electrode assembly, 16 housing can, 17 sealing assembly, 18, 19 insulating plate, 20 positive electrode lead, 21 negative electrode lead, 22 groove portion, 23 internal terminal plate, 24 lower vent member, 25 insulating member, 26 upper vent member, 27 cap, 28 gasket, 29 winding axis, 30 positive electrode current collector, 32 positive electrode mixture layer, 34 first positive electrode mixture layer, 36 second positive electrode mixture layer.

## Claims

1. A non-aqueous electrolyte secondary battery comprising:
a positive electrode;
a negative electrode; and
a non-aqueous electrolyte, wherein
the positive electrode comprises a positive electrode current collector, and a positive electrode mixture layer disposed on a surface of the positive electrode current collector, and which contains a positive electrode active material,
the positive electrode mixture layer contains a first conductive agent having a hydrogen content of greater than or equal to 1.0 mg/g and less than or equal to 2.0 mg/g, and a second conductive agent having a hydrogen content of less than or equal to 0.5 mg/g,
the positive electrode mixture layer comprises a first positive electrode mixture layer disposed on a side of the positive electrode current collector, and a second positive electrode mixture layer disposed on a side of a surface of the positive electrode mixture layer, and
the first positive electrode mixture layer contains a greater amount as a mass equivalent of the first conductive agent than the second conductive agent, and the second positive electrode mixture layer contains a greater amount as a mass equivalent of the second conductive agent than the first conductive agent.

2. The non-aqueous electrolyte secondary battery according to claim 1, wherein a carbon monoxide content of the first conductive agent is greater than or equal to 10 mg/g and less than or equal to 50 mg/g, and a carbon monoxide content of the second conductive agent is less than 10 mg/g.

3. The non-aqueous electrolyte secondary battery according to claim 1, wherein a BET specific surface area of the first conductive agent is greater than or equal to 60 m²/g and less than or equal to 110 m²/g, and a BET surface area of the second conductive agent is greater than 110 m²/g and less than or equal to 180 m²/g.

4. The non-aqueous electrolyte secondary battery according to claim 1, wherein the first conductive agent is furnace black, and the second conductive agent is acetylene black.

5. The non-aqueous electrolyte secondary battery according to claim 1, wherein a ratio of a thickness of the first positive electrode mixture layer with respect to a total of the thickness of the first positive electrode mixture layer and a thickness of the second positive electrode mixture layer is greater than or equal to 0.1 and less than or equal to 0.6.

6. The non-aqueous electrolyte secondary battery according to claim 1, wherein a content of the first conductive agent with respect to a total mass of the positive electrode active material in the first positive electrode mixture layer is greater than or equal to 0.5 mass% and less than or equal to 2.0 mass%.

7. The non-aqueous electrolyte secondary battery according to claim 1, wherein a content of the first conductive agent with respect to a total mass of the conductive agent in the first positive electrode mixture layer is greater than or equal to 90 mass%.

8. The non-aqueous electrolyte secondary battery according to claim 1, wherein a content of the second conductive agent with respect to a total mass of the positive electrode active material in the second positive electrode mixture layer is greater than or equal to 0.5 mass% and less than or equal to 2.0 mass%.

9. The non-aqueous electrolyte secondary battery according to claim 1, wherein a content of the second conductive agent with respect to a total mass of the conductive agent in the second positive electrode mixture layer is greater than or equal to 90 mass%.
